# EUROPÄISCHE PATENTANMELDUNG

(11) **EP 1 236 403 A2**
(43) Veröffentlichungstag der Anmeldung: **04.09.2002**
(21) Anmeldenummer: 02003359.3
(22) Anmeldetag: 13.02.2002
(51) Int. Cl.: A23G 3/00, A23G 3/02, A23G 1/00, A23G 1/04

(54) **Vorrichtung und Verfahren zum Herstellen von Partikeln aus einer Lebensmittel-Masse, insbesondere einer Schokoladenmasse**

(30) Priorität: 15.02.2001 DE 10107124
(71) Anmelder: RUDOLF WILD GmbH & CO. KG, D-69214 Eppelheim (DE)
(72) Erfinder: Tilz, Wolfgang, 68723 Schwetzingen (DE); Schnoor, Lars, 69142 Heidelberg (DE)
(74) Vertreter: Grünecker, Kinkeldey, Stockmair & Schwanhäusser Anwaltssozietät

(57) **Zusammenfassung**

Es wird eine Vorrichtung und ein Verfahren zum Herstellen von Partikeln aus einer Lebensmittel-Masse, insbesondere einer Schokoladenmasse beschrieben. Die Masse wird mit einer Schmelzeinrichtung bis zur Fließfähigkeit erwärmt und einer Formgebungseinrichtung zugeführt, die wenigstens eine Düse zum Vertropfen der fließfähigen Masse sowie eine Kühlung zum Verfestigen der Massetropfen in Partikelform enthält. Um eine derartige Vorrichtung und ein derartiges Verfahren auf konstruktiv einfache Weise effektiver zu gestalten, wird vorgeschlagen, dass die Kühlung eine relativ zur Düse bewegbare, gekühlte Kontaktfläche enthält.

## Beschreibung

Die Erfindung bezieht sich auf eine Vorrichtung und ein Verfahren zum Herstellen von Partikeln aus einer Lebensmittel-Masse, insbesondere einer Schokoladenmasse, der in den Oberbegriffen der Ansprüche 1 und 14 erläuterten Art.

Eine Vorrichtung und ein Verfahren diese Art sind aus der EP 976 333 bekannt. Die bekannte Vorrichtung enthält ein mit senkrechter Mittelachse angeordnetes Fallrohr, in dessen oberen Bereich eine Vertropfungseinrichtung für die fließfähige Schokoladenmasse angeordnet ist. Die Vertropfungseinrichtung enthält einen den Querschnitt des Fallrohrs im Wesentlichen überdeckenden Düsenstock aus einer Vielzahl einzelner Vertropfungsdüsen, aus denen Massetropfen austreten und im freien Fall durch das Fallrohr fallen. Der Düsenstock ist beheizt, um zu verhindern, dass die Schokoladenmasse während des Vertropfens bereits fest wird und die Düsen verstopft. Als alleiniges Kühlmittel wird ein gekühltes Gas, bevorzugt Stickstoff, verwendet. Der Stickstoff sollte eine Temperatur von mindestens - 60°C, bevorzugt- 160°C beim Einleiten und - 80°C beim Verlassen des Fallrohres aufweisen. Trotzdem ist noch eine Fallrohrlänge von insgesamt etwa 20 m notwendig. Das Kühlmittel wird bevorzugt im Gegenstrom zum Fallweg der Tropfen geleitet und verlässt das Fallrohr im Bereich des Düsenstockes. Damit ist nicht zu vermeiden, dass auch der beheizte Düsenstock mit dem Kühlmittel in Kontakt kommt. Dies führt im günstigsten Falle zu einer Energieverschwendung, im ungünstigen Falle kann dadurch Schokoladenmasse bereits im Bereich der Düsen erhärten und somit die Düsen verstopfen.

Soll mit der bekannten Vorrichtung die Form der damit herzustellenden Partikel variiert werden, so muss dies auf recht umständliche Weise durch eine entsprechende veränderte Gasführung des Kühlmittels geschehen, um eine bestimmte, zum gewünschten Ergebnis führende Turbulenz des Gases zu erzeugen. Diese Turbulenz wird bevorzugt durch eine tangentiale Einmündung des Gases erreicht, wodurch eine Drallkomponente bei der Rohrströmung erzeugt werden soll; also durch eine konstruktiv völlig andere Lösung, die ein eigenes Fallrohr benötigt.

Der Erfindung liegt somit die Aufgabe zugrunde, eine Vorrichtung und ein Verfahren bereitzustellen, mit denen auf konstruktiv und verfahrenstechnisch einfache Weise Partikel aus einer Lebensmittel-Masse, insbesondere einer Schokoladenmasse, hergestellt werden können.

Die Aufgabe wird durch eine Vorrichtung gemäß Anspruch 1 und ein Verfahren gemäß Anspruch 14 gelöst.

Die Verwendung einer relativ zur Düse bewegbaren, gekühlten Kontaktfläche zum Kühlen der Massetropfen verringert ganz entscheidend die Gefahr, dass die Massetropfen bereits beim Austritt aus der Düse gefrieren und somit Betriebsstörungen verursachen. Es hat sich weiterhin herausgestellt, dass das in der EP 976 333 befürchtete Zerplatzen der Massetropfen beim Auftreffen auf eine feste Fläche zumindest dann nicht auftritt, wenn, wie in der vorliegenden Erfindung vorgeschlagen, die Kontaktfläche gekühlt ist und sich relativ zur Düse bzw. zu den Tropfen bewegt.

Bevorzugt ist die Kontaktfläche gemäß Anspruch 2 die Umfangsfläche einer rotierend angetriebenen Kühlwalze, wobei jedoch auch denkbar wäre, beispielsweise eine Schüttelrutsche einzusetzen, oder eine bewegbare Düse über eine feststehende Kontaktfläche zu bewegen.

Mit dem in Anspruch 3 beschriebenen Schaber wird das Ablösen der gekühlten Partikel von der Kontaktfläche erleichtert.

Anspruch 4 beschreibt eine konstruktiv besonders einfache Vorrichtung, wobei die Massetropfen unter Schwerkrafteinfluss auf die Kontaktfläche gelangen.

Von besonderem Vorteil ist die Ausgestaltung nach Anspruch 5, wobei durch Veränderung des Abstandes zwischen der Kontaktfläche und der Düse die Partikelform bestimmt werden kann. So ist es beispielsweise möglich, durch Verringerung des Abstandes zwischen der Kontaktfläche und der Düse eher chipförmige Partikel zu erzeugen, während ein vergrößerter Abstand zu eher kugelförmigen Partikeln führt.

Die Erfindung eignet sich besonders zur Herstellung von sterilen Partikeln, wie sie mikrobiell sensiblen Produkten, wie beispielsweise Milchprodukten, zugesetzt werden, da sowohl die Düse als auch die Kontaktfläche gemäß Anspruch 7 gemeinsam in einem steril zu haltenden Formgebungsbehälter untergebracht werden können, der gemäß den Ansprüchen 8 bis 10 weiter ausgestaltet sein kann.

Zwar ist aus der EP 974 275 ein Verfahren zum Sterilisieren von Lebensmittel-Massen, insbesondere Schokolade, bekannt, dort ist jedoch keine Möglichkeit beschrieben, aus dieser Masse ohne Kontaminierung Partikel zu formen. Beim bekannten Verfahren wird die Masse, insbesondere Schokolade, in festem Zustand in einen geschlossenen Doppelmantel-Druckbehälter gebracht, und dort mit Hilfe der Mantelheizung auf etwa 80°C erwärmt, bis die Masse fließfähig ist. Dann wird Direktdampf eingeleitet, durch den die Masse auf eine Sterilisationstemperatur von 125°C gebracht wird. Die Mantelheizung bleibt aktiv, soll jedoch wohl eher Wärmeverluste vermeiden. Der Sterilisationsdruck beträgt etwa 3 bar, absolut. Die Masse wird über eine vorbestimmte Zeit auf der erhöhten Temperatur gehalten und anschließend wird ein Vakuum angelegt, um das durch den Dampf in die Masse eingebrachte, unerwünschte Wasser auszudampfen und die Schokolade auf ca. 60°C abzukühlen. Die fließfähige Schokolade wird anschließend in einen Vorratstank gepumpt. Die Weiterverarbeitung ist nicht beschrieben. Das Aufheizen der Masse auf Sterilisationstemperatur unter Verwendung von Direktdampf hat jedoch den Nachteil, wie dies auch der Beschreibung des bekannten Verfahrens zu entnehmen ist, dass in die Masse unverhältnismäßig viel Wasser eingebracht wird, das insbesondere für Schokolade unerwünscht ist und wieder entfernt werden muss, was zu einer Komplizierung des Verfahrens führt.

Gemäß Anspruch 11 ist bei der vorliegenden Erfindung die Sterilisierungseinrichtung zwischen einer Schmelzeinrichtung und dem Formgebungsbehälter angeordnet, so dass die Masse bereits homogen fließfähig und gut durchmischbar in die Sterilisierungseinrichtung gelangt.

Zweckmäßigerweise enthält die Sterilisiereinrichtung gemäß Anspruch 12 einen Behälter mit einem beheiz- und kühlbaren Doppelmantel, so dass die Masse durch direkten Kontakt mit dem beheizten Doppelmantel auf Sterilisationstemperatur gebracht und/oder durch direkten Kontakt mit dem gekühlten Doppelmantel von der Sterilisationstemperatur auf die Weiterverarbeitungstemperatur abgekühlt werden kann.

Zweckmäßigerweise befindet sich zwischen der Schmelzeinrichtung und der Sterilisierungseinrichtung gemäß Anspruch 13 ein beheizbarer Stapeltank, der ausreichend Vorrat an fließfähiger Masse zum Beschicken der intermittierend arbeitenden Sterilisierungseinrichtung bereitstellen kann.

Die Erfindung bezieht sich weiterhin auf ein Verfahren gemäß Anspruch 14 und Weiterbildungen des Verfahrens gemäß den Ansprüchen 15 bis 21.

Ein Ausführungsbeispiel der Erfindung wird nachfolgend anhand der Zeichnungen näher erläutert. Es zeigen:
- Fig. 1: eine schematische Darstellung einer erfindungsgemäßen Vorrichtung zur Durchführung des erfindungsgemäßen Verfahrens, und
- Fig. 2: eine schematische, vergrößerte Darstellung eines Formgebungsbehälters.

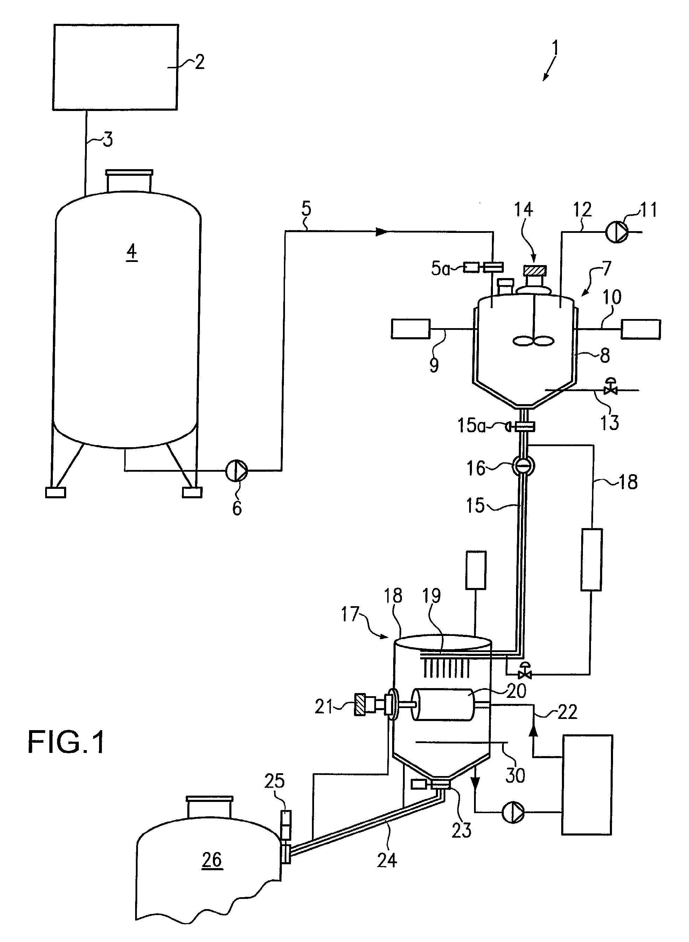

Fig. 1 zeigt in schematischer Darstellung die wesentlichsten Bestandteile einer Vorrichtung 1 zum Herstellen von Partikeln aus einer Lebensmittel-Masse und insbesondere eine Vorrichtung zum Herstellen von sterilen Partikeln aus dieser Lebensmittel-Masse. Die Lebensmittel-Masse kann jede Masse sein, die bei einer Verzehrtemperatur, insbesondere bei Raumtemperatur fest ist und durch Temperaturerhöhung fließfähig aufgeschmolzen werden kann, also insbesondere kakaohaltige Massen oder Massen, die Kakaobestandteile enthalten, bevorzugt Schokoladenmassen.

Die Vorrichtung 1 enthält in Richtung der zunehmenden Verarbeitung der Massen eine Erhitzungseinrichtung 2, in der die Masse so weit erwärmt wird, dass sie fließfähig wird, bei Schokoladenmassen liegt die dafür notwendige Temperatur zwischen etwa 40°C und etwa 80°C. Die Erhitzungsvorrichtung muß nicht unbedingt in die Verfahrenslinie integriert sein - die Masse kann auch von einem Zulieferer bereits verarbeitungsfertig angeliefert werden. Diese fließfähige, erwärmte Masse wird über eine Leitung 3 in einen Stapeltank 4 geleitet, der isoliert und mit einer Eigenheizung versehen ist. In diesen Stapeltank 4 wird die Masse in fließfähigem Zustand, d.h. zwischen 40°C und 80°C, bevorzugt 60°C, bei Schokoladenmasse, gehalten. Aus diesem Stapeltank 4 führt eine Leitung 5 mit einer Absperreinrichtung 5a über eine geeignete Pumpe 6, bevorzugt eine Zahnradpumpe, in eine Sterilisierungseinrichtung 7. Die Sterilisierungseinrichtung 7 enthält einen doppelwandigen, druckdichten und geschlossenen Behälter 8, dessen doppelte Wandung mit einem Heizkreislauf 9 für ein Heizmedium, insbesondere Dampf oder überhitztes Wasser, und einem Kühlkreislauf 10 für ein Kühlmedium, insbesondere Kaltwasser, verbunden ist. In das Innere des Sterilisationsbehälters 8 mündet eine mit einer Pumpe 11 versehene Gasleitung 12, über die steriles und/oder inertes Gas, wie beispielsweise Sterilluft oder Stickstoff, in den oberen Bereich des Behälters 8 eingeleitet werden kann, und über die mit Hilfe der Pumpe 11 ein Vakuum im Behälter 8 erzeugt werden kann. Schließlich mündet in das Innere des Behälters 8 ein Dampfanschluss 13.

Im Inneren des Behälters 8 ist eines der üblichen Mischwerke 14 angeordnet, das in der Lage ist, die gesamte sich im Behälter 8 befindende Masse laufend umzuwälzen und sie insbesondere gegen eine zu lang andauernde Einwirkung durch die beheizte Behälterwandung zu schützen. Das Mischwerk 14 ist bevorzugt als Rührwerk mit zugeordnetem Schaber ausgebildet.

Die fließfähige Masse wird durch die Pumpe 6 über die Leitung 5 und die Absperreinrichtung 5a in einer vorbestimmten Menge in den Behälter 8 gefördert. Die Mischeinrichtung 14 läuft und die Wandung des Behälters 8 wird über den Dampfkreislauf 9 auf eine Temperatur aufgeheizt, die die Masse im Inneren des Behälters 8 auf eine Sterilisationstemperatur zwischen etwa 110°C und etwa 140°C zur Abtötung aller lebensfähiger Keime erhitzen kann. Über die Leitung 12 und die Pumpe 11 wird die Masse im Behälter 8 mit Sterilluft oder Stickstoff überschichtet, so dass sich ein Druck von etwa 2,5 bar aufbaut. Hat die Masse im Behälter 8 eine Temperatur um etwa 100°C, so dass mit einer wesentlichen Kondensation nicht mehr gerechnet werden muss, kann über die Leitung 13 zusätzlich Direktdampf zugegeben werden, um den Abtötungseffekt zu steigern. Ist die erforderliche Sterilisierungstemperatur erreicht, wird sie über eine vorbestimmte Zeitdauer gehalten, bevorzugt zwischen 4 bis 10 Minuten.

Anschließend wird der Druck entspannt und, sofern notwendig, das zugesetzte Wasser entzogen, wobei bevorzugt über die Pumpe 11, der Behälter unter Vakuum gesetzt wird. Durch das Zuführen von Kaltwasser über den Kühlkreislauf 10 in den Doppelmantel wird der Behälter so weit heruntergekühlt, dass die Masse im Inneren des Behälters eine Temperatur annimmt, bei der sie gerade noch fließfähig ist, bei Schokoladenmasse ist dies etwa 20°C bis etwa 40°C. Anschließend wird die Masse auf dieser Temperatur gehalten, wiederum über die Zufuhr eines Heizmediums über den Heizkreislauf 9, gegebenenfalls vermischt mit einem Kühlmedium über den Kühlkreislauf 10.

Statt über den Doppelmantel des Behälters, kann die Sterilisation auch durch Aufheizen der Masse mittels Mikrowellen- oder Hochfrequenztechnik vorgenommen werden, wie dies an sich bekannt ist. Alternativ zum Doppelmantel können auch andere bekannte Wärmetauscher, wie beispielsweise Schabe- oder Rohrbündelwärmetauscher, eingesetzt werden, wobei eine gleichmäßige Erwärmung gewährleistet sein muß, ohne dass es zu Auftrennung des Lebensmittels in seine Bestandteile kommt. Die Erhitzung in Röhren mit ausreichender Turbulenz durch geeignete Mischer oder eine hohe Pumpenleistung liefert die besten Ergebnisse. Auch wenn die Erhitzung der Masse durch andere Wärmequellen erfolgt, kann trotzdem die Kühlung durch den Doppelmantel des Behälters 8 erfolgen.

Der Sterilisierungsbehälter 8 ist über eine doppelwandige, beheizbare Ausgabeleitung 15, in der eine geeignete Absperreinrichtung 15a und gegebenenfalls eine Pumpe 16 angeordnet sind, mit einer Formgebungseinrichtung 17 verbunden. Die Ausgabeleitung 15 wird über einen Heizkreislauf 18 mit einem Heizmedium versorgt, so dass die Masse in der Ausgabeleitung 15 auf der gewünschten Temperatur, bei der die Masse gerade fließfähig ist, gehalten werden kann, d.h. bei Schokoladenmassen zwischen etwa 25°C bis etwa 30°C.

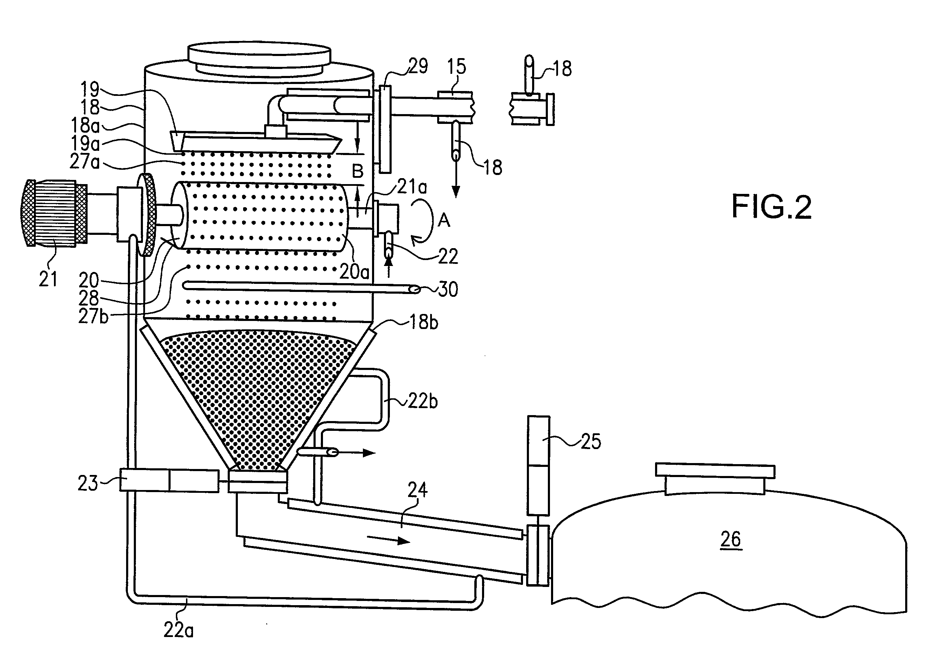

Die Formgebungseinrichtung 17 wird nachfolgend anhand der Fig. 2 näher erläutert und enthält ebenfalls einen geschlossenen Behälter 18, in dem eine Vertropfungseinrichtung 19 und eine senkrecht und im Abstand darunterliegende, horizontal ausgerichtete Kühlwalze 20 angeordnet sind. Die Kühlwalze 20 wird über einen Motor 21 mit einer Antriebswelle 21a rotierend angetrieben und steht mit einem Kühlmittelkreislauf 22 für Kühlsole in Verbindung. Im unteren Bereich des Behälters 18 ist über eine Absperreinrichtung 23 eine kühlbare Ablaufleitung 24 angeschlossen, die über eine weitere Absperreinrichtung 25 mit einem nur angedeuteten Vorratsbehälter 26 für die Schokoladenpartikel in Verbindung steht. Die Absperreinrichtungen 23 und 25 wirken als Schleuse zum Aufrechterhalten steriler Bedingungen im Behälter 18.

Wie Fig. 2 zeigt, enthält der Formgebungsbehälter 18 einen oberen, zylindrischen Bereich 18a und einen in Richtung des Schwerkraftflusses untenliegenden trichterförmigen Bereich 18b. Im oberen, zylindrischen Bereich 18a ist die Vertropfungseinrichtung 19 angeordnet, die wenigstens eine Düse 19a enthält. Bevorzugt ist die Vertropfungseinrichtung 19 als beheizbarer Düsenstock ausgebildet und enthält eine Vielzahl zueinander im bevorzugt gleichen Abstand stehender Düsen, die auf der gleichen horizontalen Ebene und bevorzugt in zueinander und zur Antriebswelle 21a parallelen Reihen nebeneinander angeordnet und auf die Scheitellinie der Kühlwalze 20 ausgerichtet sind.

Die Kühlwalze 20 ist durch die Antriebswelle 21a des Motors 21 in Richtung des Pfeiles A rotierend und mit regelbarer Drehzahl antreibbar. Die Antriebswelle 21a erstreckt sich steril durch die Behälterwand und ist über Gleitwellendichtungen und Kondensatschlösser an der Behälterwand gelagert, so dass aseptische Verhältnisse gegeben sind. Der Antrieb enthält einen Frequenzumformer, der zusammen mit der Kühlwalze 20 auf einem Flansch vormontiert ist und zur Feinabstimmung der Walzenumdrehung auf die Verstopfungsgeschwindigkeit dient.

Die Antriebswelle 21a ist so angeordnet, dass die Umfangsfläche 20a im Scheitelpunkt der Kühlwalze 20 in einem Abstand B unterhalb der Düsen 19a der Vertropfungseinrichtung 19 angeordnet ist. Der Abstand B bestimmt somit den kleinsten freien Fallweg, den die aus den Düsen 19a austretenden oder unter Druck herausgepressten Massetropfen 27a zurücklegen müssen, bevor sie auf die als Kontaktfläche ausgebildete Umfangsfläche 20a der Kühlwalze 20 auftreffen.

Der Kühlwalze 20 ist eine Abstreifeinrichtung 28 in Form eines Schabers oder dergleichen zugeordnet, der die fest gewordenen Massetropfen von der Kontaktfläche 20a abstreift und als feste Partikel 27b in den als Lagerbereich ausgebildeten, trichterförmigen Teil 18b des Behälters 18 fallen lässt.

Der Abstand B zwischen der Kontaktfläche 20a und der Düse 19 kann verstellt werden, bevorzugt über einen verstellbaren Flansch 29, der die Vertropfungseinrichtung 19 am Behälter 18 hält. Damit kann der freie Fall der Massetropfen 27a und somit, in Verbindung mit der Temperatur der Masse beim Austritt aus den Düsen 19a, die Form der festen Partikel 27b bestimmt und verändert werden.

Der Walze 20 wird über den in Fig. 1 näher dargestellten Kühlmittelkreislauf 22 Kühlsole von - 20°C über die hohl ausgebildete Antriebswelle 21a zu- und auf der Motorseite wieder abgeführt. In den Kühlmittelkreislauf 22 ist weiterhin über eine Leitung 22a die Leitung 24 und über eine Leitung 22b der den Lagerbereich bildende, trichterförmige Teil 18b des Formgebungsbehälters 18 angeschlossen. In den zylindrischen Teil 18a des Formgebungsbehälters 18 mündet eine weitere Kühlmittelleitung 30, über die Kühlmittel auf einer relativ niedrigen Temperatur, bevorzugt Stickstoff, in den Formgebungsbehälter 18 eingebracht werden kann, um die Kühlung zu beschleunigen, ein vollständiges Durchkühlen der Partikel zu erreichen und eine Erwärmung zu vermeiden. Die Kühlmittelleitung 30 erstreckt sich in Form einer Art Kühllanze mit einer Vielzahl von Austrittsöffnungen parallel zur Antriebswelle 21 a und seitlich unterhalb der Kühlwalze 20 in den Behälter 18 hinein und über die gesamte axiale Länge der Kühlwalze 20.

Ist im Sterilisierungsbehälter 7 eine sterilisierte Menge der Masse vorhanden, und sollen feste Partikel 27b geformt werden, so wird, kontinuierlich oder diskontinuierlich, durch die Pumpe 16 über die Leitung 15 fließfähige Masse, die im Falle von Schokoladenmasse eine Temperatur von 25°C bis 30°C aufweist, in die Vertropfungseinrichtung 19 gefördert. Die Kühlwalze 20 wird durch den Motor 21 rotierend angetrieben und über den Kühlkreislauf 22 mit Kühlmittel versorgt. Gegebenenfalls wird zusätzlich Kühlmittel über die Leitung 30 in den Behälter eingeleitet.

Die aus den Düsen 19a heraustropfenden Massetropfen 27a werden bereits im freien Fall über den Abstand B gekühlt und fallen dann auf die sich quer zur Fall- bzw. Bewegungsrichtung der Massetropfen 27a bewegende, stark gekühlte (bei Schokoladenmasse auf - 20°C) Kontaktfläche 20a, wo sie rasch heruntergekühlt werden, so dass sie zumindest ihre Form halten. Die im Bereich der Abstreifeinrichtung 28 angekommenen Massetropfen sind somit bereits feste Partikel, die durch die Abstreifeinrichtung 28 von der Kontaktfläche 20a abgestreift werden und in den trichterförmigen Teil 18b fallen, der ebenfalls gekühlt ist, um eine Erwärmung zu vermeiden. Durch Öffnen der Absperreinrichtung 23 fallen die Partikel in die als Rutsche ausgebildete Leitung 24 bis zur zweiten Absperreinrichtung 25. Die erste Absperreinrichtung 23 kann wieder geschlossen werden, bevor die zweite Absperreinrichtung 25 geöffnet wird, so dass die Absperreinrichtungen 23 und 25 als eine Art Schleuse wirken, die das Innere des Formgebungsbehälters 18 aseptisch halten. Die fertigen Partikel können dann in einem geeigneten Vorratsbehälter 26 auf Vorrat gehalten werden.

Mit allen Bestandteilen der erfindungsgemäßen Vorrichtung können Dampfleitungen oder dgl. verbunden werden, um die gesamte Anlage von Zeit zu Zeit sterilisieren zu können.

Es soll weiterhin angemerkt werden, dass sowohl die Kühlmittel als auch die Heizmittel jeweils im Kreislauf geführt wird, um auf diese Weise Energie zu sparen.

In Abwandlung der beschriebenen und gezeichneten Ausführungsbeispiele kann die Formgebungseinrichtung auch zur Verarbeitung nicht sterilisierter Massen eingesetzt werden. Die Kontaktfläche kann als Rüttelrutsche oder dgl. ausgebildet sein. Der Lagerbereich im unteren Teil des Formgebungsbehälters kann entfallen, insbesondere wenn eine kontinuierliche Abförderung der festen Partikel gewährleistet ist. Die Temperaturen können je nach den Eigenschaften und der Empfindlichkeit der verarbeiteten Massen ausgewählt werden. Auch die speziellen Kühl- und Heizmittel können durch andere ersetzt werden. Statt der in den Zeichnungen dargestellten Schieber können andere geeignete Absperreinrichtungen verwendet werden, insbesondere kann die den Formgebungsbehälter abschließende Absperreinrichtung ein Dosierventil sein. Statt über eine Fallstrecke können die Massetropfen auch auf eine, ggfs. auch senkrecht angeordnete, Kontaktfläche gesprüht werden.

## Patentansprüche

1. Vorrichtung (1) zum Herstellen von Partikeln (27b) aus einer Lebensmittel-Masse, insbesondere einer Schokoladenmasse, mit einer Schmelzeinrichtung (2) zum Erwärmen der Masse bis zur Fließfähigkeit und einer Formgebungseinrichtung (17), die wenigstens eine Düse (19a) zum Vertropfen der fließfähigen Masse sowie eine Kühlung (20) zum Verfestigen der Massetropfen (27a) in Partikelform (27b) enthält, **dadurch gekennzeichnet, dass** die Kühlung eine relativ zur Düse (19a) bewegbare, gekühlte Kontaktfläche (20a) enthält.

2. Vorrichtung nach Anspruch 1, **dadurch gekennzeichnet, dass** die Kontaktfläche (20a) die Umfangsfläche einer rotierend angetriebenen Kühlwalze (20) ist.

3. Vorrichtung nach Anspruch 1 oder 2, **dadurch gekennzeichnet, dass** der sich bewegenden Kontaktfläche (20a) eine Abstreifeinrichtung (28) zum Lösen der Partikel (27b) von der Kontaktfläche (20a) zugeordnet ist.

4. Vorrichtung nach einem der Ansprüche 1 bis 3, **dadurch gekennzeichnet, dass** die Düse (19a) im Wesentlichen senkrecht und in einem Abstand (B) oberhalb der gekühlten Kontaktfläche (20a) angeordnet ist.

5. Vorrichtung nach Anspruch 4, **dadurch gekennzeichnet, dass** der Abstand (B) zwischen der Düse (19a) und der Kontaktfläche (20a) verstellbar ist.

6. Vorrichtung nach einem der Ansprüche 1 bis 5, **dadurch gekennzeichnet, dass** die Kühlung zusätzlich ein gasförmiges Kühlmittel enthält.

7. Vorrichtung nach einem der Ansprüche 1 bis 6, **dadurch gekennzeichnet, dass** zum Herstellen von sterilen Partikeln (27b) ein Formgebungsbehälter (18) vorgesehen ist, in dem die Düse (19a) und die Kontaktfläche (20a) angeordnet sind.

8. Vorrichtung nach Anspruch 7, **dadurch gekennzeichnet, dass** der Formgebungsbehälter (18) einen Lagerbereich (18b) für die Partikel (27b) enthält.

9. Vorrichtung nach Anspruch 8, **dadurch gekennzeichnet, dass** der Lagerbereich (18b) kühlbar ist.

10. Vorrichtung nach einem der Ansprüche 7 bis 9, **dadurch gekennzeichnet, dass** der Formgebungsbehälter (18) eine gekühlte und mit einer Schleuse (23, 25) versehene Ausgabeleitung (24) für die Partikel (27b) aufweist.

11. Vorrichtung nach einem der Ansprüche 7 bis 10, **dadurch gekennzeichnet, dass** zwischen der Schmelzeinrichtung (2) und dem Formgebungsbehälter (18) eine Sterilisierungseinrichtung (7) angeordnet ist.

12. Vorrichtung nach Anspruch 11, **dadurch gekennzeichnet, dass** die Sterilisierungseinrichtung (7) einen Behälter (8) mit einem als Wärmetauscher ausgebildeten Doppelmantel aufweist.

13. Vorrichtung nach Anspruch 11 oder 12, **dadurch gekennzeichnet, dass** zwischen der Schmelzeinrichtung (2) und der Sterilisierungseinrichtung (7) ein beheizbarer Stapeltank (3) zum Zwischenspeichern von fließfähiger Masse angeordnet ist.

14. Verfahren zum Herstellen von Partikeln (27b) aus einer Lebensmittel-Masse, insbesondere einer Schokoladenmasse, wobei die Masse bis zur Fließfähigkeit erwärmt, vertropft und in Partikelform abgekühlt wird, **dadurch gekennzeichnet, dass** die Massetropfen (27a) zum Abkühlen auf eine gekühlte, sich relativ zu den Massetropfen (27a) bewegende Kontaktfläche (20a) aufgebracht werden.

15. Verfahren nach Anspruch 14, **dadurch gekennzeichnet, dass** die Massetropfen (27a) durch freien Fall auf die Kontaktfläche (20a) aufgebracht werden, und dass die Länge der Fallstrecke verändert werden kann.

16. Verfahren nach Anspruch 14 oder 15, **dadurch gekennzeichnet, dass** die Massetropfen (27a) zusätzlich durch ein gasförmiges Kühlmedium gekühlt werden.

17. Verfahren nach einem der Ansprüche 14 bis 16, **dadurch gekennzeichnet, dass** zum Herstellen steriler Partikel (27b) die Masse zunächst sterilisiert und anschließend in einem geschlossenen Raum (18) vertropft und gekühlt wird.

18. Verfahren nach Anspruch 17, **dadurch gekennzeichnet, dass** die Masse durch Aufheizen an einer beheizten Fläche auf Sterilisationstemperatur gebracht wird.

19. Verfahren nach Anspruch 18, **dadurch gekennzeichnet, dass** die Masse beim Sterilisieren mit einem sterilen Gas unter erhöhtem Druck überschichtet wird.

20. Verfahren nach Anspruch 18 oder 19, **dadurch gekennzeichnet, dass** zum Sterilisieren zusätzlich Dampf in die Masse eingebracht wird, sobald die Masse eine vorbestimmte, erhöhte Temperatur, bevorzugt etwa 100°C, erreicht hat.

21. Verfahren nach einem der Ansprüche 14 bis 20, **gekennzeichnet durch** eine mehrstufige Temperaturführung, wobei die Masse zunächst bis zur Fließfähigkeit erwärmt, bei einer Schokoladenmasse auf etwa 40°C bis etwa 80°C, dann zur Sterilisierung gefördert, anschließend auf Sterilisierungstemperatur erhitzt, bevorzugt zwischen etwa 110°C bis etwa 140°C, anschließend bis auf eine noch fließfähige Temperatur gekühlt, bei Schokoladenmasse auf etwa 20°C bis etwa 40°C, und bei dieser Temperatur zum Vertropfen gefördert wird.
